# DEMANDE DE BREVET EUROPEEN

(11) **EP 2 578 376 A1**
(43) Date de publication de la demande: **10.04.2013**
(21) Numéro de dépôt: 12185444.2
(22) Date de dépôt: 21.09.2012
(51) Int. Cl.: B29C 45/56, G02B 1/04, B29D 11/00

(54) **Pièce optique comprenant une ame et une pluralité de couches**

(30) Priorité: 06.10.2011 FR 1159052
(71) Demandeur: VALEO VISION, 93012 Bobigny Cedex (FR)
(72) Inventeur: Viard, Gilles, 72100 Le Mans (FR)

(57) **Abrégé**

L'invention concerne une pièce optique 1 destinée à être traversée par un faisceau lumineux 2 émis par un dispositif d'éclairage et/ou de signalisation, comprenant une âme 5 présentant une épaisseur A, ladite âme 5 étant intercalée entre au moins une première couche 6 et une deuxième couche 7 présentant chacune une épaisseur B, caractérisé en ce que l'épaisseur A de l'âme 5 est supérieure à l'épaisseur B de chacune des couches 6, 7.

L'invention vise également le procédé de fabrication de cette pièce optique, ainsi que le poste de fabrication de celle-ci.

Application aux véhicules automobiles.

## Description

Le secteur technique de la présente invention est celui des pièces optiques employées dans les dispositifs d'éclairage et/ou de signalisation pour véhicule automobile. Plus particulièrement, la présente invention a trait à une pièce optique qui est un élément transparent destiné à faire converger ou diverger la lumière, tel qu'une lentille optique, ou encore à propager la lumière par réflexion interne, tel qu'un guide de lumière.

Dans l'art antérieur, les pièces optiques utilisées pour focaliser un faisceau lumineux sont en générale installées entre la source de lumière, par exemple une ampoule au Xénon, et une glace de fermeture du projecteur qui reçoit cet ensemble. Ces pièces optiques présentent une face plane et une face bombée, l'épaisseur d'une telle pièce étant importante en vue d'atteindre certaines propriétés de focalisation en fonction de la forme du projecteur, de la distance qui sépare la source lumineuse de la pièce optique, etc...

Cette pièce optique est constituée d'un empilement de couches superposées les une sur les autres. La fabrication de cette pièce optique selon l'art antérieur intervient de la manière suivante. On moule une matrice centrale dans un moule. Cette matrice est ainsi définie par les dimensions du moule et du support plan qui ferme le moule. L'épaisseur de cette matrice centrale est limitée par le temps de refroidissement nécessaire avant l'étape suivante. Cette dernière consiste en l'installation d'un deuxième moule par-dessus la matrice de manière à mouler une première couche par-dessus la matrice. On comprend ainsi que la première couche est délimitée par le moule, la matrice et le support plan. Cette étape et l'étape de refroidissement sont reproduites autant de fois que nécessaire pour atteindre l'épaisseur finale de la pièce optique.

L'inconvénient de cette pièce optique selon l'art antérieur réside dans le nombre d'étapes de moulages successifs nécessaires pour fabriquer la pièce optique. Par ailleurs, l'outillage, et en particulier les moules et les presses, sont particulièrement onéreux et encombrant. Une telle situation dégrade très largement le coût de revient de cette pièce optique.

En outre, la pièce optique selon l'art antérieur ne peut être optimisée que sur une seule de ses faces, c'est-à-dire la face externe de la couche finale du côté bombé de la pièce optique. Ceci représente donc un inconvénient supplémentaire, la performance optique de cette pièce ne pouvant être améliorée.

Le but de la présente invention est donc de résoudre les inconvénients décrits ci-dessus principalement en réalisant une pièce optique, par exemple une lentille, apte à être installée à l'intérieur d'un projecteur de véhicule automobile pour focaliser des rayons de lumière, ladite pièce optique étant transparente et comprenant une couche centrale et au moins deux autres couches surmoulées..

L'invention a donc pour objet une pièce optique destinée à être traversée par un faisceau lumineux émis par un dispositif d'éclairage et/ou de signalisation, comprenant une âme présentant une épaisseur, ladite âme étant intercalée entre au moins une première couche et une deuxième couche présentant chacune une épaisseur, **caractérisée en ce que** l'épaisseur de l'âme est supérieure à l'épaisseur de chacune des couches. L'épaisseur de l'âme ou des couches est mesurée selon une même direction qui traverse l'âme et la couche concernée. D'une manière générale, cette direction est parallèle à la direction du faisceau lumineux qui traverse la pièce optique.

On comprend ainsi que la pièce optique peut atteindre son épaisseur finale deux fois plus vite puisqu'elle comprend des couches fabriquées de part et d'autre de l'âme. Avantageusement, l'âme forme un support qui reçoit des couches d'épaisseur constamment plus faible à mesure que l'on s'approche de l'épaisseur finale de la pièce optique. De plus, le temps de refroidissement entre chaque couche est réduit, en particulier par le fait que les calories sont dissipées au travers de chaque partie de moule, de chaque côté de la pièce optique.

Avantageusement, la pièce optique est une lentille optique ou un guide de lumière, encore plus avantageusement une lentille optique.

Selon un exemple de réalisation, la première couche est reliée à la deuxième couche par une portion, autrement appelé portion commune à la première couche et à la deuxième couche. On comprend de ceci que la première et la deuxième couche sont fabriquées simultanément, par exemple à partir d'un même point d'injection, ceci permettant d'équilibrer pendant le remplissage les pressions d'injection de part et d'autre de l'âme, et donc d'annuler les forces résultantes sur l'âme. Le temps de fabrication est ainsi réduit puisque l'on augmente l'épaisseur de la lentille en deux sens opposés. La portion est alors commune aux deux couches, la portion étant de préférence agencée hors d'une zone de passage du faisceau lumineux, c'est-à-dire la zone centrale de la pièce optique.

Selon un exemple de réalisation, chacune des première ou deuxième couches est délimitée par une première face en contact contre l'âme et une deuxième face concave, ladite concavité de la deuxième face étant tournée vers l'âme. Une telle solution permet d'augmenter très rapidement l'épaisseur de la pièce optique dans sa portion centrale. On peut par exemple réaliser rapidement une pièce optique biconvexe.

Avantageusement, au moins l'une des couches comprend une zone centrale apte à être traversée par le faisceau lumineux et terminée par un bord qui présente une épaisseur périphérique inférieure à l'épaisseur de la zone centrale. On comprend que la ou les couches présentent une épaisseur déterminée au centre et une épaisseur réduite sur leur pourtour. On réduit ainsi l'encombrement général de la pièce optique.

Selon un exemple de caractéristique de l'invention, l'épaisseur périphérique du bord diminue progressivement. Une telle solution offre un angle de dépouille qui facilite le retrait du moule à chaque opération de fabrication de couche.

Selon un exemple de réalisation, l'âme est délimitée par une première face en contact avec la première couche et une deuxième face en contact avec la deuxième couche, la première face de l'âme étant parallèle à la deuxième face de l'âme.

Alternativement, la première face de l'âme et la deuxième face de l'âme peuvent être de forme concave. Cette amélioration permet d'augmenter l'épaisseur de la portion centrale de la pièce optique traversée par le faisceau lumineux, ce qui permet de réduire les épaisseurs des couches surmoulées sur l'âme. De la sorte, on diminue les temps de refroidissement et/ou on améliore les propriétés optiques de ces couches.

Avantageusement, la pièce optique comprend une pluralité de couches de part et d'autre de l'âme, une couche externe présentant une épaisseur inférieure à l'une quelconque des couches agencées entre la couche externe et l'âme. On comprend ici que la dernière couche de la pièce optique est la plus fine de toutes les couches composant la pièce optique, ce qui améliore les performances optique de la pièce et permet de réduire ses tolérances dimensionnelles.

Avantageusement encore, chaque couche agencée d'une côté de l'âme est reliée à une autre couche agencée de l'autre côté de l'âme par une portion commune à ces deux couches. On comprend ici que la couche en question est reliée à une couche qui lui est directement opposée par rapport à l'âme.

Selon un exemple avantageux de réalisation, l'âme comprend au moins une excroissance dépourvue de couche. La fonction de cette excroissance est de servir de zone de préhension pour manipuler la pièce optique au cours de son processus de fabrication, notamment les phases d'injection et/ou de maintien des couches successives. Cette excroissance peut également servir de moyen de fixation pour installer à demeure la pièce optique dans le dispositif d'éclairage et/ou de signalisation. Cette excroissance peut enfin assurer une fonction de style dans le dispositif d'éclairage et/ou de signalisation qui reçoit la pièce optique.

L'invention vise aussi un procédé de fabrication d'une pièce optique destinée à être traversée par un faisceau lumineux émis par un dispositif d'éclairage et/ou de signalisation au cours duquel :
- on place ou on moule dans une cavité une âme délimitée par une première face d'âme et une deuxième face d'âme opposée à la première face d'âme par rapport à un plan d'extension de l'âme,
- on surmoule sur la première face d'âme et sur la deuxième face d'âme respectivement une première couche et une deuxième couche.

Selon une première variante du procédé, on surmoule simultanément la première couche et la deuxième couche.

Avantageusement, on surmoule la première couche et la deuxième couche de sorte que l'épaisseur de celle-ci soit inférieure à une épaisseur de l'âme.

Avantageusement, selon une étape supplémentaire du procédé, on surmoule une troisième couche sur la première couche et une quatrième couche sur la deuxième couche.

Le procédé selon l'invention est de préférence complété par une étape de refroidissement entre chaque étape de surmoulage.

Selon un exemple de réalisation, dans le cas où l'âme comprend au moins une excroissance dépourvue de couche, il est prévu une étape de suppression de l'excroissance. Les traces d'une telle étape sont cependant visibles sur la pièce optique une fois finie. Selon un autre exemple de réalisation, l'excroissance est conservée pour servir d'élément de fixation ou d'élément de style dans un dispositif d'éclairage et/ou de signalisation.

Avantageusement, le procédé selon l'invention est mis en oeuvre pour fabriquer une pièce optique destinée à être traversée par un faisceau lumineux émis par un dispositif d'éclairage et/ou de signalisation selon la présente invention.

L'invention couvre enfin un poste de fabrication d'une pièce optique destinée à être traversée par un faisceau lumineux émis par un dispositif d'éclairage et/ou de signalisation comprenant un plateau, avantageusement rotatif, se déplaçant entre au moins deux stations, et au moins un moule disposé à l'une des stations, le plateau comprenant au moins un moyen de préhension d'une excroissance constitutive d'une âme que comprend la pièce optique ; ledit moyen de préhension maintenant mécaniquement, notamment par l'intermédiaire de mors, ladite âme aux deux stations, et pendant la ou les phases de transfert entre stations.

Selon un exemple de réalisation, le moule du poste de fabrication évoqué ci-dessus comprend une unique buse d'injection apte à alimenter une première cavité du moule agencée d'un côté d'une zone de positionnement de l'âme, et une deuxième cavité du moule agencée à l'opposé de la première cavité par rapport à la zone de positionnement de l'âme. On comprend ici que la zone de positionnement de l'âme est le volume que l'âme occupe dans le moule quand elle est retenue par le moyen de préhension.

Ce poste de fabrication peut notamment être utilisé pour mettre en oeuvre une variante de procédé selon l'invention dans laquelle l'âme comprend une excroissance.

Un tout premier avantage selon l'invention réside dans la rapidité de fabrication d'une pièce optique pour dispositif d'éclairage et/ou de signalisation pour véhicule automobile. Le coût de revient est ainsi réduit.

Un autre avantage réside dans la possibilité d'augmenter la qualité et les performances optiques de la pièce selon l'invention. En effet, et comme l'épaisseur des couches diminue à mesure que l'on s'approche de l'épaisseur finale de la pièce, il est possible d'augmenter la précision dimensionnelle de la pièce, en corrigeant progressivement les défauts de forme liés au retrait de la matière et en ayant une couche finale d'épaisseur fine, par exemple inférieure à 40 micromètres, permettant de réduire ces défauts. La tolérance est ainsi plus facile à atteindre puisque qu'il est possible de jouer sur les deux faces (deux dernières couches) de la pièce optique.

D'autres caractéristiques, détails et avantages de l'invention ressortiront plus clairement à la lecture de la description donnée ci-après à titre indicatif en relation avec des dessins dans lesquels :
- la figure 1 est une vue en coupe de la pièce optique selon l'invention,
- la figure 2 est une vue de dessus de la pièce optique illustrée à la figure 1,
- la figure 3 est une vue en coupe montrant en détails une zone de la pièce optique illustrée à la figure 1,
- la figure 4 est une vue schématique d'un poste de fabrication selon l'invention.

Il faut noter que les figures exposent l'invention de manière détaillée pour mettre en oeuvre l'invention, lesdites figures pouvant bien entendu servir à mieux définir l'invention le cas échéant.

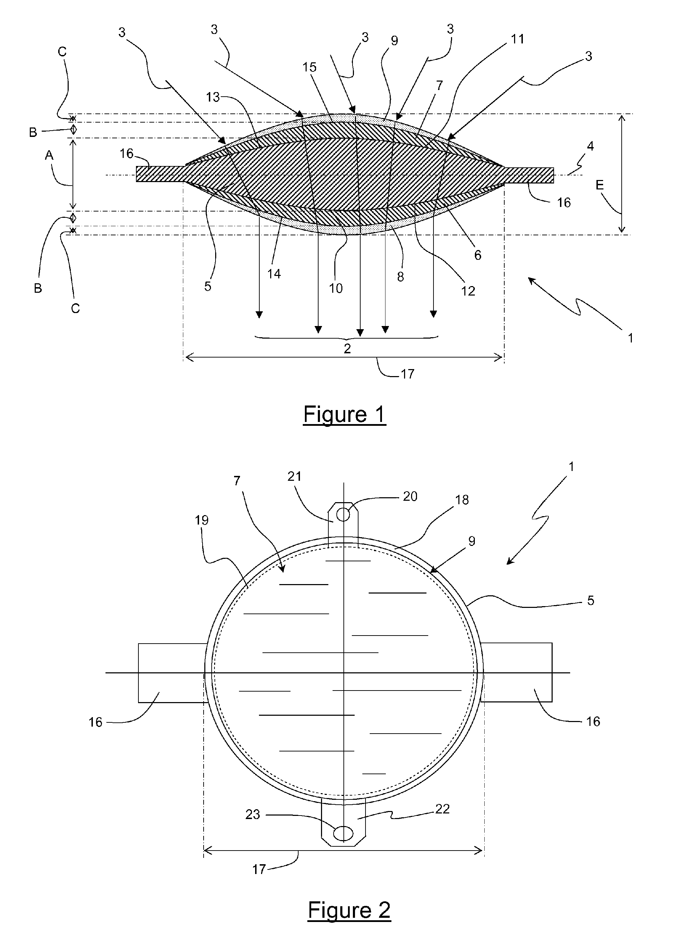

La figure 1 montre une pièce optique 1 selon l'invention. La pièce optique est apte à laisser passer à son travers la lumière de manière à générer un faisceau lumineux pour véhicule automobile. Cette pièce optique est notamment transparente. Il s'agit de manière préférée d'une lentille destinée à être installée dans un dispositif d'éclairage et/ou de signalisation avant ou arrière pour véhicule automobile. En ce qui concerne l'avant du véhicule, ce dispositif est autrement appelé projecteur et sert à projeter sur la route un faisceau lumineux 2 indispensable pour une conduite en conditions nocturnes.

Un tel faisceau lumineux est généré par une source lumineuse (non représentée) installée dans le projecteur. Cette source émet des rayons lumineux 3 dans plusieurs directions différentes et il convient de réorienter ces rayons de manière à les projeter efficacement sur la route empruntée par le véhicule. Cette fonction est réalisée au moins en partie par une pièce optique 1 selon l'invention, cette dernière ayant pour rôle de focaliser par divergence ou convergence ces rayons lumineux 3 constitutif du faisceau lumineux 2.

La pièce optique 1 est ainsi traversée par le faisceau lumineux 2 de part en part et selon une direction proche de 90° par rapport à un plan 4 qui forme, notamment, un plan de symétrie dans lequel la pièce optique s'étend.

La pièce optique 1 comprend une âme 5 prise en sandwich entre au moins une première couche 6 et une deuxième couche 7. L'âme 5 forme ainsi un support de réception sur laquelle les couches 6 et 7 sont disposées. L'âme 5 est délimitée par une première face d'âme 10 et une deuxième face d'âme 11. Selon l'exemple de réalisation montré sur la figure 1, la première face d'âme 10 et la deuxième face d'âme 11 suivent une génératrice en forme de courbe de manière concave. Cette forme particulière permet de disposer d'une épaisseur de matière importante dans une zone centrale de la pièce optique dès la fabrication de l'âme. L'épaisseur des couches suivantes pourra ainsi être réduite.

Selon une autre alternative, la première face d'âme 10 et la deuxième face d'âme 11 s'étendent toutes deux dans des plans parallèles. L'âme 5 prend ainsi la forme d'un élément plat. D'une manière générale, la forme de l'âme peut être quelconque mais gardera comme objectif de maximiser son épaisseur par rapport aux couches suivantes, et à garantir un remplissage équilibré des couches suivantes de part et d'autre de l'âme pour repartir les forces d'injection.

La première couche 6 et la deuxième couche 7 sont reliées à l'âme 5 par une technique de surmoulage. Autrement dit, le matériau employé pour la fabrication de l'âme 5 et le matériau employé pour la fabrication des couches sont avantageusement chimiquement compatibles de sorte qu'ils se mélangent intimement sur une fine épaisseur. La tenue mécanique est alors parfaitement opérée. Ainsi, une première face 12 de la première couche 6 est en contact contre la première face d'âme 10. De même, la deuxième couche 7 est délimitée par une première face 13 qui entre en contact avec la deuxième face d'âme 11 pendant le surmoulage des couches 6 et 7 sur l'âme 5.

Selon l'exemple illustré, la première couche 6 et la deuxième couche 7 sont également délimitées par une deuxième face respectivement référencée 14 et 15. Au moins une de ces deuxième faces 14 et 15, et avantageusement les deux, suivent un profil courbe, cette courbe formant alors une concavité tournée vers l'âme 5. En d'autres termes, la pièce optique 1 est bombée sur au moins un de ses côtés, et de manière préférentielle, sur ces deux côtés.

La première couche 6 et la deuxième couche 7 ont pour rôle d'augmenter l'épaisseur de la pièce optique pour atteindre une épaisseur finale E attendue. La première couche 6 et la deuxième couche 7 ont également pour rôle de corriger les défauts de forme des faces des couches précédentes.

L'âme présente une épaisseur référencée A. Cette dernière se mesure selon une direction perpendiculaire au plan 4 dans lequel s'étend la pièce optique 1. Cette direction dans laquelle est mesurée l'épaisseur de l'âme peut également être définie comme une droite parallèle aux rayons lumineux après leur passage au travers de la pièce optique 1.

La première couche 6 et la deuxième couche 7 sont définies également au moins par leur épaisseur B. Quand il s'agit de comparer l'épaisseur A de l'âme avec l'épaisseur B d'au moins l'une des deux couches 6 et 7, la mesure s'effectue le long d'une même droite coupant transversalement le plan 4 de la pièce optique 1.

Ainsi mesurée, l'épaisseur A de l'âme 5 est supérieure à l'épaisseur B de la première couche 6 et/ou de la deuxième couche 7. Une telle structure permet de fabriquer une couche d'épaisseur réduite, de sorte que son temps de refroidissement peut être réduit et la précision optique peut être augmentée.

L'âme 5 est ainsi intercalée, ou interposée, entre deux couches qui s'étendent de part et d'autre de l'âme 5 par rapport au plan d'extension 4.

Dans l'exemple de réalisation de la figure 1, la pièce optique 1 comprend encore une troisième couche 8 et une quatrième couche 9. La troisième couche 8 couvre la première couche 6. Cette troisième couche 8 est accolée à la première couche 6 par une technique de surmoulage. L'épaisseur C de cette troisième couche 8 est inférieure à l'épaisseur B de la première couche 6.

De manière similaire, la quatrième couche 9 couvre la deuxième couche 7 et elle est appliquée sur celle-ci par une technique de surmoulage mise en oeuvre par injection. L'épaisseur C de cette quatrième couche 9 est inférieure à l'épaisseur B de la deuxième couche 7.

Il peut être ainsi réalisé une pluralité de couches à partir de chaque face de l'âme 5, la couche externe étant néanmoins d'épaisseur inférieure à n'importe laquelle des couches disposées entre la couche externe et l'âme 5.

Dans l'exemple de la figure 1, la première couche 6 est d'épaisseur identique à l'épaisseur de la deuxième couche 7. Il en va de même en ce qui concerne l'épaisseur de la troisième et la quatrième couche référencées 8 et 9. Il s'agit là d'un cas d'espèce qui présente l'intérêt de refroidir lesdites couches dans un temps identique mais il va de soit que l'invention couvre le cas où, par exemple, la première couche ou la troisième couche sont d'épaisseur différente en comparaison respectivement avec l'épaisseur de la deuxième couche et de la quatrième couche.

La figure 1 montre encore un élément intéressant de l'invention. L'âme 5 comprend au moins une excroissance 16 qui débouche latéralement d'une zone centrale 17 de la pièce optique 1 selon l'invention. La variante de réalisation illustrée ici montre deux excroissances 16. Ces dernières s'étendent par exemple dans le plan 4 qui passe au centre de l'âme 5. On notera tout particulièrement qu'aucune des couches surmoulées sur l'âme 5 ne s'étend sur l'excroissance 16. Autrement dit, cette excroissance 16 reste libre et dépourvu de couche.

Ces excroissances 16 sont utilisées pour manoeuvrer la pièce optique 1 entre chacune des étapes de surmoulage, ainsi que pendant les étapes de transfert entre chaque étape de surmoulage. Ces excroissances peuvent également servir de zone de fixation de la pièce optique dans le projecteur.

La figure 2 montre la pièce optique objet de la figure 1 vue de dessus. La forme générale de cette pièce optique 1 est circulaire mais il va de soit que l'invention couvre également une forme rectangulaire, notamment carrée, ou une forme torique.

L'âme 5 est ici équipée des deux excroissances 16 de forme générale rectangulaire. Dans le cas d'espèce, l'âme 5 comprend ces deux excroissances 16 qui sont placées de manière diamétralement opposée par rapport à la zone centrale 17. Un premier cercle concentrique représenté en trait plein à l'intérieur du cercle externe délimitant l'âme 5 illustre un bord ou arête 18, notamment périphérique, de la quatrième couche 9, cette dernière formant la couche externe de la pièce optique 1. Un deuxième cercle concentrique représenté en trait pointillé illustre un bord 19 de l'une des couches, ici la deuxième couche 7, intercalée entre l'âme 5 et la couche externe formée dans cet exemple de réalisation par la quatrième couche 9.

L'invention couvre le cas où la première couche 6 et la deuxième couche 7 sont structurellement indépendantes. Ceci signifie que ces couches peuvent être réalisées simultanément mais à partir de deux points d'injection distincts. Il en va bien évidement de même pour les couches supplémentaires qui peuvent être surmoulées sur la pièce optique 1 de la même manière.

L'invention trouve cependant une application particulière quand la première couche 6 et la deuxième couche 7 sont surmoulées à partir d'un même point d'injection 20. Dans cette situation, la première couche 6 et la deuxième couche 7 sont reliées l'une à l'autre par une portion 21. Cette dernière prend par exemple la forme d'une languette qui s'étend en dehors de la section de passage du faisceau lumineux, c'est-à-dire en dehors de la zone centrale 17 de la pièce optique 1. Cette portion 21 forme ainsi un ensemble monobloc avec la première et la deuxième couche car ces trois éléments sont réalisés lors d'une même opération d'injection.

Une telle structure s'applique mutatis-mutandis à la fabrication des couches supplémentaires, quand la pièce optique en est munie. Dans l'exemple de la figure 2, la pièce optique comprend une troisième couche 8 et une quatrième couche 9. Celles-ci superposent respectivement la première couche 6 et la deuxième couche 7 et sont reliées l'une à l'autre par un flanc 22 identique à la portion 21. Le moulage de ce flanc 22, de la troisième couche 8 et de la quatrième couche 9 intervient à partir d'un unique point d'injection 23 qui se trouve situé au niveau du flanc 22.

On comprend de ce qui précède que chaque couche agencée d'un côté de l'âme est reliée à une autre couche agencée de l'autre côté de l'âme par une portion 21 ou flanc 22 qui vient en contact sur le bord des couches concernées.

Une telle organisation présente l'avantage suivant. Le moulage simultané de part et d'autre de l'âme évite toute déformation ou destruction de l'âme par déformation lors de l'injection. En effet, les cavités du moule situées de part et d'autre de l'âme se remplissent en même temps, ce qui permet d'appliquer une même force de chaque côté de l'âme, ou de la pièce optique semi-finie pour ce qui concerne les couches externes.

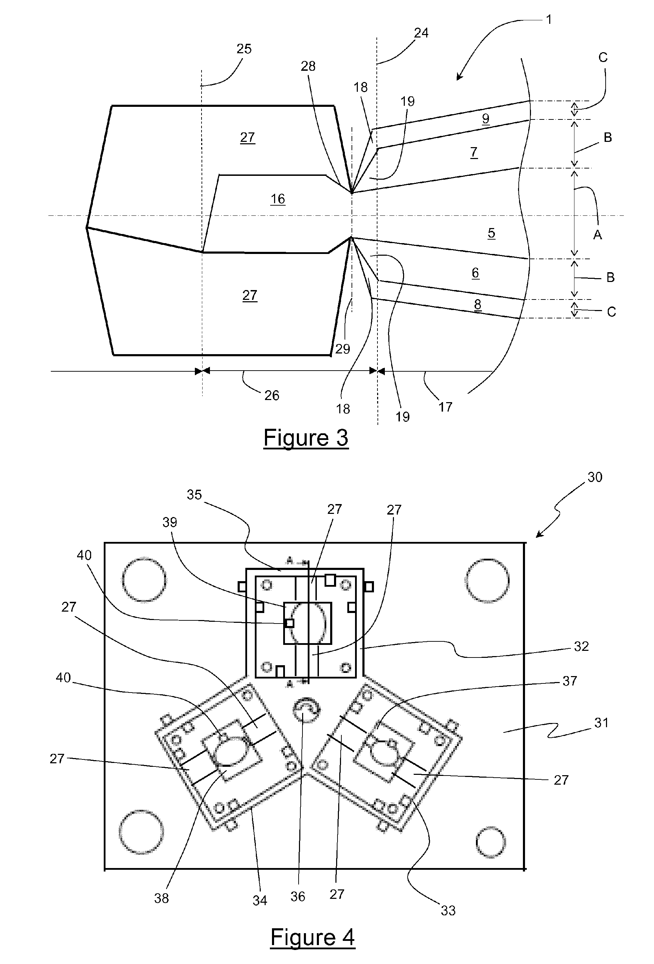

La figure 3 montre en détails le bord de la pièce optique 1, dans une vue en coupe équivalente à celle représentée sur la figure 1.

Sur cette figure, sont présents deux traits en pointillé verticaux qui illustrent, à droite d'un premier trait référencé 24, la zone centrale 17 où le faisceau lumineux passe. Entre ce premier trait 24 et un deuxième trait 25, la pièce optique 1 comprend une zone technique 26 dans laquelle s'étendent notamment les excroissances 16, la portion commune à la première couche 6 et à la deuxième couche 7, et le flanc commun à la troisième couche 8 et à la quatrième couche 9.

L'excroissance 16 visible sur cette figure est prise entre deux mors 27 qui font partie du poste de fabrication de la pièce optique. L'excroissance 16 présente une portion conique 28 prise en sandwich par les mors 27, ceci permettant de garantir un bon maintien mécanique de l'âme 5 au cours de chaque étape de surmoulage, et pendant le transfert entre chaque station de moulage.

La première couche 6 et la deuxième couche 7 sont terminées par le bord 19. Ce bord 19 présente une épaisseur qui se réduit linéairement entre la portion centrale 17 et une ligne 29 qui termine la portion conique 28 de l'excroissance 16. On comprend de ceci que l'épaisseur de la première couche 6 ou de la deuxième couche 7 est constante en quelques endroits de la zone centrale 17 et qu'elle se réduit au droit du bord 19, ce dernier formant un bord périphérique qui ceinture la portion centrale 17. On constate enfin sur cette figure que l'épaisseur A de l'âme 5 est supérieure à l'épaisseur de l'une quelconque des couches constitutives de la pièce optique 1.

Les couches supplémentaires surmoulées sur la première et la deuxième couche comprennent également un bord périphérique. La troisième couche 8 et la quatrième couche 9 comprennent chacune un bord ou arête 18 qui présente une épaisseur périphérique inférieure à l'épaisseur de la zone centrale 17. Une telle épaisseur de réduite progressivement, et éventuellement linéairement, jusqu'à disparaître au droit de la ligne 29.

Dans le mode de réalisation illustrée sur cette figure 3, la troisième couche 8 et la quatrième couche 9 forment des couches externes qui délimitent la pièce optique 1 vis-à-vis de son environnement. On constate que l'épaisseur A de l'âme 5, ainsi que l'épaisseur B de la première couche 6 ou de la deuxième couche 7, est supérieure à l'épaisseur de ces couches externes, ces dernières présentant l'épaisseur la plus faible de toutes les strates (couches et âme) constituant la pièce optique 1.

La figure 4 montre le poste de fabrication 30, vue de dessus, utilisé pour fabriquer une pièce optique telle que détaillée aux figures 1 à 3. Ce poste de fabrication 30 forme un exemple pour la mise en oeuvre du procédé selon l'invention, ce dernier pouvant bien entendu être réalisé par tout autre moyen.

Le poste de fabrication objet de la figure 4 comprend un châssis 31 sur lequel est posé un plateau 32, notamment rotatif. Ce dernier est susceptible de se déplacer entre au moins deux stations, l'exemple de la figure 4 montrant trois stations référencées 33 à 35.

Selon une variante, il est prévu n stations et n-1 moules. Il s'agit du cas où l'âme est fabriquée sur un poste de fabrication distinct du poste selon l'invention et que celle-ci est installée par un opérateur ou de manière automatisée au niveau de la première station 33.

Le poste de fabrication peut également comprendre autant de moule que de stations. Dans ce cas, la première station comprend un premier moule 37 dans lequel est injectée la matière constitutive de l'âme.

Dans l'un ou l'autre des cas, le poste de fabrication comprend un moyen de préhension constitué entre autre des mors 27 qui enserrent chaque excroissance de l'âme. Ce maintien mécanique intervient tout d'abord à la première station 33, puis le plateau 32 est déplacé, par exemple par rotation autour d'un axe 36, de sorte à translater les mors 27, qui maintiennent l'âme, vers la deuxième station 34.

La deuxième station comprend un deuxième moule 38 dont la fonction est de délimiter l'encombrement, en particulier l'épaisseur, de la première couche, de la deuxième couche, et éventuellement de la portion commune à ces deux couches. Pour ce faire, le moule présente des cavités qui sont disposées de part et d'autre d'une zone de positionnement de l'âme.

A ce stade, la première et la deuxième couche peuvent avantageusement être refroidies, soit naturellement soit par des moyens forcés.

L'âme étant toujours maintenue dans les mors 27, le plateau 32 est déplacé, par exemple par rotation, de la deuxième station 34 vers la troisième station 35.

Cette troisième station 35 est agencée pour réaliser par surmoulage au moins la troisième couche et la quatrième couche. Pour ce faire, cette troisième station 35 comprend un troisième moule 39 dans lequel la pièce optique semi-finie (âme surmoulée de la première couche et de la deuxième couche) est installée. Ce troisième moule 39, au moyen de cavités, délimite les couches externes de la pièce optique, dans sa version finalisée, ces couches externes étant ici réalisées par la troisième couche et la quatrième couche détaillées ci-dessus.

Une fois cette dernière opération de moulage effectuée, le moyen de préhension libère la pièce optique. Cette libération est par exemple réalisée par écartement des mors 27, ce qui permet d'en extraire l'excroissance.

Il ressort ainsi de ce qui précède que, pour une même pièce optique, le moyen de préhension maintient celle-ci tout au long du processus de fabrication.

Selon une particularité du poste de fabrication 30 selon l'invention, le premier moule 38 et/ou le deuxième moule 39, utilisés pour la fabrication de la pluralité de couches, comprend une unique buse d'injection 40 qui alimente en matière constitutive des couches une première cavité du moule, ici le troisième moule 39. Cette dernière est agencée d'un côté d'une zone de positionnement de l'âme dans le moule. La buse d'injection 40 aliment simultanément une deuxième cavité du moule agencée à l'opposé de la première cavité par rapport à la zone de positionnement de l'âme. La buse d'injection 40 est alors installée à la périphérie immédiate de la zone de positionnement de l'âme, ou de la pièce optique semi-finie quand celle-ci comprend une pluralité de couches par côté de l'âme.

L'invention couvre également un procédé de fabrication ou d'obtention d'une pièce optique telle que détaillée aux figures 1 à 3.

Selon ce procédé, on place ou on moule dans une cavité d'un moule une âme délimitée par une première face d'âme et une deuxième face d'âme opposée à la première face d'âme par rapport à un plan d'extension de l'âme. On prévoit ainsi le cas où l'âme est fabriquée préalablement et utilisée comme point de départ dans le procédé, mais on prévoit aussi la situation dans laquelle la première étape du procédé est le moulage de l'âme.

On surmoule ensuite sur la première face d'âme et sur la deuxième face d'âme respectivement une première couche et une deuxième couche, ces couches étant d'épaisseur inférieure à l'âme. Ceci facilite la fabrication de ces couches et garantit une tolérance et une qualité optique compatible avec l'utilisation de cette pièce optique dans un projecteur.

Pour gagner du temps lors de la fabrication de la pièce optique, il est avantageux de surmouler simultanément la première couche et la deuxième couche, notamment par l'emploi d'une buse d'injection qui alimente les cavités du moule qui délimitent les couches.

Quand la pièce optique comprend une pluralité de couches de part et d'autre de l'âme, on reproduit une étape de surmoulage. On injecte alors, par une étape supplémentaire, la matière constitutive de la troisième couche sur la première couche ainsi que la matière constitutive de la quatrième couche sur la deuxième couche.

Une étape de refroidissement entre chaque étape de surmoulage peut être nécessaire. On notera cependant que le temps consacré à cette étape de refroidissement est très nettement réduit. En effet, ce temps dépend de l'épaisseur de la couche concernée et comme l'épaisseur des couches est réduite, on diminue corrélativement le temps de refroidissement.

La description ci-dessus fait état d'excroissances qui font partie de l'âme. Si dans certaines applications, ces excroissances sont conservées, il existe des situations dans lesquelles il est nécessaire de supprimer ces excroissances. Le procédé prévoit alors une étape finale qui consiste à supprimer ces excroissances, par découpage ou usinage, notamment.

La description ci-dessus emploie le terme couche au singulier et au pluriel. Quand le terme couche est employé au pluriel, il désigne au moins la première couche, la deuxième couche, la troisième couche et la quatrième couche.

## Revendications

1. Pièce optique (1) destinée à être traversée par un faisceau lumineux (2) émis par un dispositif d'éclairage et/ou de signalisation, comprenant une âme (5) présentant une épaisseur (A), ladite âme (5) étant intercalée entre au moins une première couche (6) et une deuxième couche (7) présentant chacune une épaisseur (B), **caractérisée en ce que** l'épaisseur (A) de l'âme (5) est supérieure à l'épaisseur (B) de chacune des couches (6, 7).

2. Pièce optique selon la revendication 1, dans lequel la première couche (6) est reliée à la deuxième couche (7) par une portion (21).

3. Pièce optique selon l'une des revendications 1 ou 2, dans lequel chacune des première ou deuxième couches (6, 7) est délimitée par une première face (12, 13) en contact contre l'âme (5) et une deuxième face concave (14, 15), ladite concavité étant tournée vers l'âme (5).

4. Pièce optique selon l'une quelconque des revendications 1 à 3, dans lequel au moins l'une des couches (6, 7) comprend une zone centrale (17) apte à être traversée par le faisceau lumineux (2) et terminée par un bord (19) qui présente une épaisseur périphérique inférieure à l'épaisseur de la zone centrale (17).

5. Pièce optique selon l'une quelconque des revendications précédentes, comprenant une pluralité de couches (6 à 9) de part et d'autre de l'âme (5), une couche externe (8, 9) présentant une épaisseur (C) inférieure à l'une quelconque des couches (6, 7) agencées entre la couche externe (8, 9) et l'âme (5).

6. Pièce optique selon la revendication 5, dans lequel chaque couche (6, 8) agencée d'un côté de l'âme (5) est reliée à une autre couche (7, 9) agencée de l'autre côté de l'âme (5) par une portion (21, 22).

7. Pièce optique selon l'une quelconque des revendications précédentes, dans lequel l'âme (5) comprend au moins une excroissance (16) dépourvue de couche.

8. Procédé de fabrication d'une pièce optique (1) destinée à être traversée par un faisceau lumineux (2) émis par un dispositif d'éclairage et/ou de signalisation au cours duquel :
- on place ou on moule dans une cavité une âme (5) délimitée par une première face d'âme (11) et une deuxième face d'âme (12) opposée à la première face d'âme (11) par rapport à un plan (4) d'extension de l'âme (5),
- on surmoule sur la première face d'âme (11) et sur la deuxième face d'âme (12) respectivement une première couche (6) et une deuxième couche (7).

9. Procédé selon la revendication 8, dans lequel on surmoule simultanément la première couche (6) et la deuxième couche (7).

10. Procédé selon l'une quelconque des revendications 8 à 9, dans lequel on surmoule par une étape supplémentaire une troisième couche (8) sur la première couche (6) et une quatrième couche (9) sur la deuxième couche (7).

11. Procédé selon l'une quelconque des revendications 8 à 10, dans lequel, l'âme (5) comprenant au moins une excroissance (16) dépourvue de couche, il est prévu une étape de suppression de l'excroissance (16).

12. Poste de fabrication (30) d'une pièce optique (1) destinée à être traversée par un faisceau lumineux (2) émis par un dispositif d'éclairage et/ou de signalisation comprenant un plateau (32) déplaçable entre au moins deux stations (33, 34) et au moins un moule (38) disposé à l'une des stations, le plateau (32) comprenant au moins un moyen de préhension d'une excroissance (16) constitutive d'une âme (5) que comprend la pièce optique (1), ledit moyen de préhension maintenant ladite âme (5) aux deux stations (33, 34).

13. Poste de fabrication selon la revendication 12, dans lequel le moule (38) comprend une unique buse d'injection (40) apte à alimenter une première cavité du moule (38) agencée d'un côté d'une zone de positionnement de l'âme (5) et une deuxième cavité du moule (38) agencée à l'opposé de la première cavité par rapport à la zone de positionnement de l'âme (5).
